(19) Europäisches Patentamt

Europ̈ean Patent Office

Office europ̈een des brevets

(11) Veröffentlichungsnummer: **0 011 185
B1**

(12) **EUROPÄISCHE PATENTSCHRIFT**

(45) Veröffentlichungstag der Patentschrift:
14.10.81

(21) Anmeldenummer: 79104245.0

(22) Anmeldetag: 31.10.79

(51) Int. Cl.³: **G 01 N 22/04, H 01 P 7/06**

(54) Mikrowellenfeuchtemessgerät mit umschaltbaren Messbereichen.

(30) Priorität: 11.11.78 DE 2848993

(43) Veröffentlichungstag der Anmeldung:
28.05.80 Patentblatt 80/11

(45) Bekanntmachung des Hinweises auf die Patenterteilung:
14.10.81 Patentblatt 81/41

(84) Benannte Vertragsstaaten:
AT DE FR GB IT

(56) Entgegenhaltungen:
DE-A-2 031 795
DE-A1-2 340 130
DE-A1-2 454 788
GB-A-1 030 834
GB-A-1 106 185
GB-A-1 111 384
G-I-T Fachzeitschrift für das Laboratorium, 18, Jg.
September 1974, Darmstadt,
H. G. FITZKY »Feuchtemessungen in Festkörpern, Flüssigkeiten und Gasen mit Mikrowellen«
Seiten 869, 872—874, 876, 878—880

(73) Patentinhaber: BAYER AG, Zentralbereich Patente,
Marken und Lizenzen, D-5090 Leverkusen 1, Bayerwerk
(DE)

(72) Erfinder: Fitzky, Hans Georg, Dr., Kolpingstrasse 7,
D-5068 Odenthal (DE)
Erfinder: Söder, Jörg Michael, Dr., Roggendorfstrasse 55,
D-5000 Köln 80 (DE)
Erfinder: Schmitt, Franz, Heinrich-Lerch-Strasse 11,
D-5000 Köln 91 (DE)
Erfinder: Bollongino, Norbert, Friedrichshoehe 13,
D-5653 Leichlingen (DE)
Erfinder: Rehrmann, Helmut, Huescheiderstrasse 19,
D-5090 Leverkusen 31 (DE)

# 0 011 185

## Mikrowellenfeuchtemeßgerät mit umschaltbaren Meßbereichen

Die Erfindung betrifft eine Vorrichtung zur Messung des Wassergehaltes von elektrisch nicht leitenden, isotropen Materialien, insbesondere von Pulvern, Granulaten, Pasten, Flüssigkeiten, bestehend aus einem frequenzmodulierten Mikrowellenoszillator, der in einer Transmissionsanordnung einen Resonator speist, welcher in seiner Mitte mit einer Probe des zu untersuchenden Materials beschickbar ist und einer Detektorschaltung zur Messung der Spitzenamplitude des Transmissionssignales, bei der die Änderung des Transmissionssignales der Gütefaktoränderung des Resonators durch die eingebrachte Probe entspricht.

Geräte dieser Art sind bekannt und dienen zur schnellen Feuchtebestimmung von Produkten im Labor und Betrieb. Ein Überblick über den Stand der Technik wird z. B. gegeben in H. G. Fitzky, GIT-Fachz. Lab. 1974, S. 869 ff. Hierin wird unter anderem ein Meßgerät zur Feuchtemessung an Einzelproben im Labor auf der Basis eines zylindrischen Meßresonators mit dem $TM_{010}$-Feldtyp beschrieben. In diesen wird in axialer Richtung ein Probenbehälter aus PTFE eingeschoben, der die zu untersuchende Probe enthält. Um eine hohe Meßempfindlichkeit zu erhalten, ist die Probe am Ort des maximalen elektrischen Feldes innerhalb des Resonators lokalisiert. Der Resonator ist als Transmissionszelle konzipiert, wobei die Ein- und Auskopplung mittels magnetischer Iriskoppler erfolgt. Durchmesser und Tiefe der runden Irisbohrung, z. B. an zwei gegenüberliegenden Stellen der zylindrischen Resonatorwand, bestimmen die Güte Q des Resonators ($Q = \omega/\Delta\omega$, $\omega$ = Mittenfrequenz, $\Delta\omega$ = Halbwertsbreite der Resonanz) und damit die Meßempfindlichkeit. Hohe Güte bedeutet eine große Zahl von Durchstrahlungen der Probe und damit hohe Meßempfindlichkeit und umgekehrt. Kleine Durchmesser der Irisbohrung ergeben eine schwache Ankopplung und damit eine hohe Resonatorgüte, große Durchmesser der Irisbohrung ergeben starke Ankopplung und niedrige Güte. Übliche Geräte sind bezüglich des Feuchtemeßbereichs durch die Wahl der Durchmesser der Irisbohrung festgelegt. Geräte dieser Art haben den Nachteil, daß sie nur innerhalb eines eng begrenzten Feuchtebereichs genaue Resultate liefern, z. B. innerhalb 0,5—5 Gew.-% $H_2O$. Eine mechanische Umschaltung der Irisbohrung kommt wegen schwieriger Kontaktprobleme nicht in Frage. Werden Messungen über einen größeren Feuchtebereich verlangt, müssen mehrere Geräte für unterschiedliche Meßbereiche verwendet werden. Als Ausweg bietet sich die Verwendung entsprechend geringerer Einwaagen an, z. B. bei 10fach höherer Feuchte die Einfüllung nur eines Zehntels der üblicherweise benutzten Menge (0,5 g anstelle 5 g). Nachteilig ist hierbei, daß bei nicht vollkommener Produkthomogenität Schwankungen das Meßergebnis verfälschen können oder daß die Körnung des Materials keine einfache Teilung zuläßt.

Der Erfindung liegt die Aufgabe zugrunde, ein Feuchtemeßgerät zu entwickeln, das in einfacher und absolut reproduzierbarer Weise (Eichbarkeit!) eine Feuchtemessung über einen großen Feuchtebereich ermöglicht, wobei durch eine elektrische Umschaltung zwei oder mehr Feuchtemeßbereiche realisiert werden.

Diese Aufgabe wird erfindungsgemäß dadurch gelöst, daß die Mittenfrequenz des Mikrowellenoszillators über mehrere Stufen umschaltbar ist und entsprechend den Mittenfrequenzen derart unterschiedliche Feldtypen im Resonator angeregt werden, daß sich die Probe, ohne ihre Lage im Resonator zu verändern, zur Messung hoher Wassergehalte in einem Knotenbereich des elektrischen Meßfeldes und zur Messung geringer Wassergehalte in einem Maximum des elektrischen Meßfeldes befindet.

Bei einer bevorzugten Ausführungsform der Erfindung kann außerdem die Resonatorgüte durch Umschaltung auf geometrisch unterschiedliche Koppelglieder am Resonatorein- und -ausgang eingestellt werden. Damit ergibt sich eine weitere Möglichkeit, den Meßbereich des Gerätes an die jeweilige, durch die Praxis vorgegebene Problemstellung anzupassen.

Weiterbildungen und spezielle Ausführungsformen der Erfindung sind in den Unteransprüchen beschrieben.

Die Vorteile der Erfindung sind darin zu sehen, daß für alle in der Praxis vorkommenden Feuchtemeßbereiche nur ein einziges Gerät erforderlich ist. Der Meßbereich kann in einfacher Weise am Gerät selbst umgeschaltet werden.

Die früher notwendigen Umbauten am Gerät durch die Verwendung verschiedener Koppler und gegebenenfalls auch Probenhalterungen bei einer Änderung des Meßbereiches können entfallen. Bei der Ausführung mit periodischer Abtastung der Resonanzsignale der verschiedenen angeregten Feldtypen wird der optimale Meßbereich für den jeweiligen Feuchtemeßwert sogar vom Gerät selbsttätig eingestellt.

Im folgenden wird ein Ausführungsbeispiel der Erfindung anhand von Zeichnungen näher beschrieben. Es zeigt

Fig. 1 einen Meßresonator mit elektrischer Ankopplung,

Fig. 2 den dazugehörigen Probenbehälter,

Fig. 3 die elektrische Feldverteilung längs der Mittellinie des Resonators für verschiedene Feldtypen,

Fig. 4 einen Meßresonator mit magnetischer Ankopplung,

2

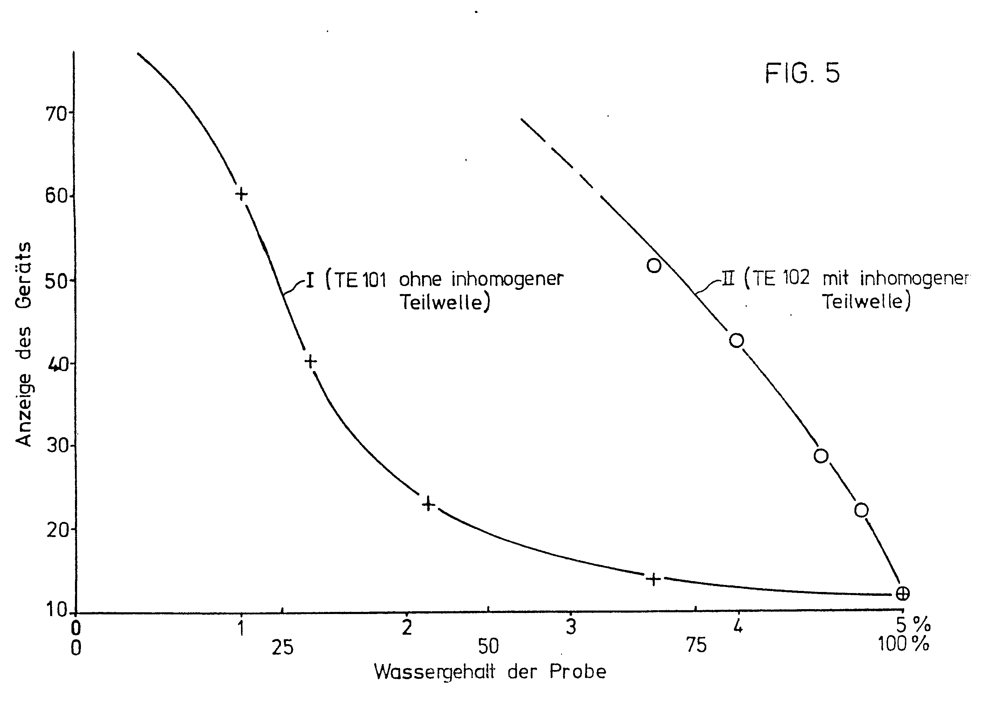

Fig. 5 Eichkurven des Gerätes mit und ohne Anregung einer inhomogenen Teilwelle im Probenvolumen und

Fig. 6 ein Blockschaltbild der kompletten Mikrowellenmeßanordnung.

Der Erfindung liegen zwei wesentliche Erkenntnisse zugrunde.

1. Die Dämpfung eines Resonators durch eine bestimmte Menge (Einwaage) einer elektrisch verlustbehafteten Substanz von bestimmter Form (Probenbehälter) hängt ganz wesentlich davon ab, an welcher Stelle — bei gegebenem Feldtyp — die Probe eingebracht wird. Vorausgesetzt wird, daß die Feldverteilung durch die eingebrachte Probe nicht zu stark gestört wird und daß die Probe sich innerhalb eines Bereichs mit einer annähernd homogenen Feldverteilung befindet, so daß kleine Lageveränderungen bzw. Inhomogenitäten innerhalb der Probe keine störende Variation des Dämpfungswertes ergeben. Üblicherweise wird die Probe, deren Feuchte gemessen werden soll, in den Bereich des elektrischen Feldmaximums gebracht, um eine hohe Meßempfindlichkeit für kleine Wassergehalte zu erzielen. Bei hohen Wassergehalten ist die resultierende Dämpfung jedoch meist zu groß, um eine genaue Messung ausführen zu können. Abhilfen bestehen in der Reduzierung des Gütefaktors des Resonators (Verringerung der Anzahl der Durchstrahlungen der Probe) oder in der Verringerung der Einwaage, die jedoch die oben beschriebenen Nachteile mit sich bringen.

Wie Versuche gezeigt haben, ist es jedoch möglich, auch die normale Menge hochfeuchten Materials zur Messung zu verwenden, wenn die Probe nicht am Ort des elektrischen Feldmaximums, sondern im Bereich des Knotens des elektrischen Feldes, gleichzeitig Maximum des magnetischen Feldes, untergebracht wird. Das überraschende Ergebnis der Messungen zeigt, daß bei der Verwendung üblicher Probenmengen bis zu 20fach höhere Wasserkonzentration erfaßt werden können.

Zur Erweiterung des Meßbereiches eines Meßresonators könnte daher die Umsetzung der Probe aus dem Bereich des E-Maximums in den Bereich des E-Minimums vorgesehen werden. Der Resonator müßte dann mit zwei oder gegebenenfalls mehreren Aufnahmestellen für den Probenhalter versehen werden. Demgegenüber stellt die erfindungsgemäße elektrische Umschaltung des Feldtyps eine wesentliche elegantere Lösung dar. Dadurch kommt man mit einer einzigen Aufnahmestelle für den Probenbehälter aus, da sich durch diese Umschaltung eine Verschiebung des elektrischen Feldes vom E-Feldmaximum zum E-Feldminimum am Probenort erreichen läßt.

2. Zusätzlich kann die Feuchtemeßempfindlichkeit des Gerätes durch den Gütefaktor des Meßresonators beeinflußt werden. Allgemein nimmt der Gütefaktor (bei sehr schwacher Kopplung) zu höheren Feldtypen hin zu, etwa in der Reihe $TE_{101}$, $TE_{102}$, $TE_{103}$ usw. Bei starker Ankopplung des Resonatorein- und -ausganges kann die Güte (etwa gleich Zahl der Durchstrahlungen der Probe) durch die Wahl der Lage und der Dimensionierung eines elektrischen Koppelgliedes variiert werden.

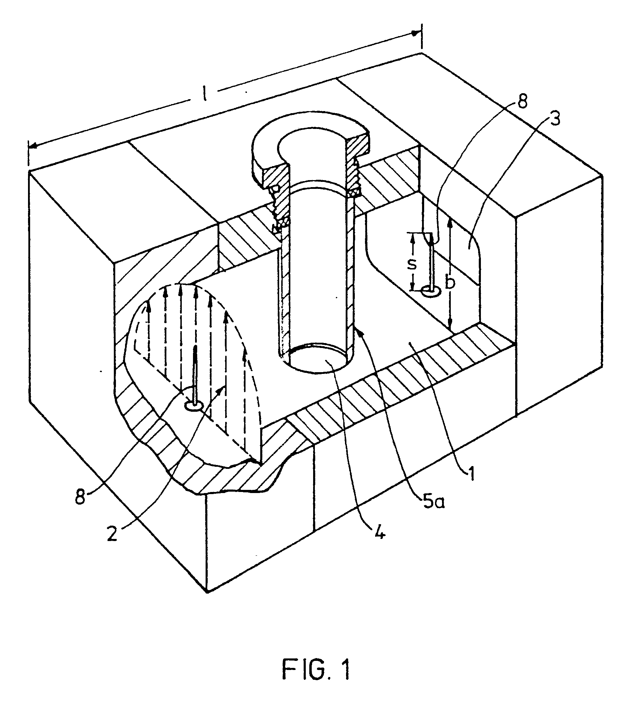

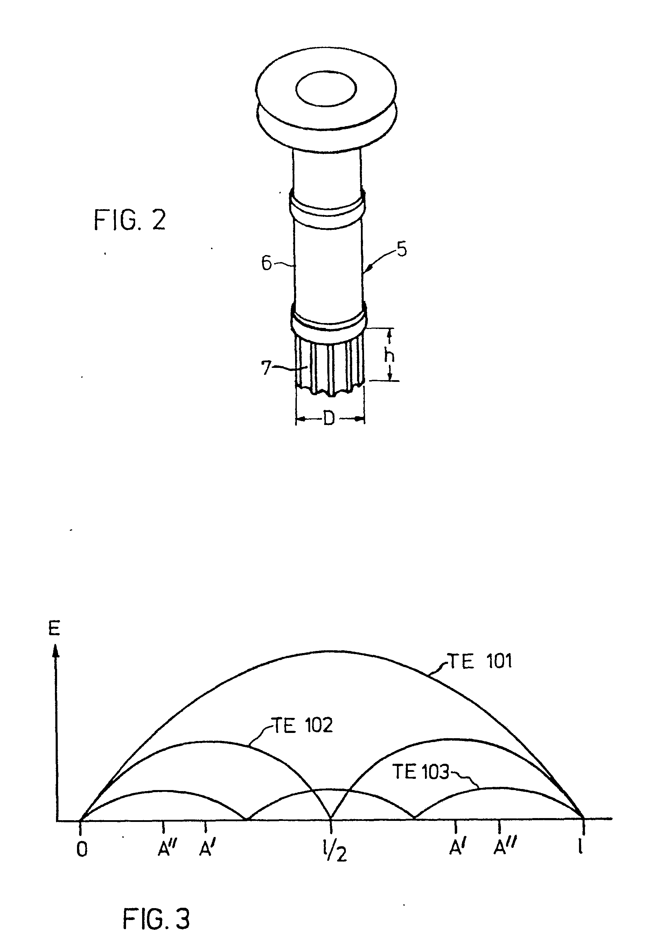

Ein Meßresonator mit elektrischer Ankopplung ist in Fig. 1 gezeigt. Er kann in den Feldtypen $TE_{101}$ und $TE_{102}$ angeregt werden. Der eigentliche Resonator besteht aus dem metallisch umschlossenen Rechteckhohlraum 1 mit dem Resonatoreingang 2 und dem -ausgang 3. An der Ober- und Unterseite des Resonators befinden sich zylindrische Öffnungen 4 zum Einschieben des Probenbehälters 5 (siehe Fig. 2). Er besteht aus einem Hohlzylinder 6 aus PTFE oder einem Material mit ähnlich niedrigen dielektrischen Verlusten und geringster Wasseraufnahmefähigkeit. Zur Beschränkung des Probenvolumens auf einen Bereich angenähert konstanten Meßfeldes wird der Durchmesser D des Hohlzylinders kleiner als 20% der Rohrwellenlänge des höchstfrequenten Feldtyps und die Höhe h des zylindrischen Probenraums kleiner als 30% der Höhe b des Rechteckwellenleiters gewählt. Im Bereich niedriger Feuchten muß eine Anregung von inhomogenen Teilwellen, z. B. vom Typ $TM_{01}$ oder $TM_{11}$ im Probenraum 7 vermieden werden. Anderenfalls würde sich ein anormaler Verlauf der Eichkurve ergeben. Zu diesem Zweck muß der Durchmesser D des Probenraumes 7 derart begrenzt werden, daß $D \leq (1/\sqrt{\varepsilon'})d_g$, dabei bedeutet $\varepsilon'$ der Realteil der Dielektrizitätskonstanten der Probe und $d_g = k_v \lambda$ mit $k_1 = 0{,}766$ für die $TM_{01}$-Welle und $k_2 = 0{,}586$ für die $TM_{11}$-Welle. $\lambda$ ist dabei die Vakuumwellenlänge. Gewöhnlich liegt D im Bereich von 10 bis 40 mm. Der Probenbehälter 5 wird von oben her in das Führungsrohr 5a aus PTFE in der Mitte des Resonators 1 eingeschoben. Der Probenraum 7 befindet sich dann im Zentrum des Resonators 1. Bei Anregung des $TE_{101}$-Feldtyps befindet sich die Probe im E-Feld-Maximum, während sie bei Erregung im $TE_{102}$-Feldtyp im Bereich des Minimums lokalisiert ist (siehe Fig. 3). Im ersten Falle wird eine hohe Feuchtemeßempfindlichkeit, im zweiten Falle eine um den Faktor 10 bis 20 niedrigere Meßempfindlichkeit erzielt. Durch Verwendung des $TE_{103}$-Feldtyps kann, wie später ausführlich beschrieben wird, ein weiterer Feuchtemeßbereich mittlerer Meßempfindlichkeit erschlossen werden. Die Frequenzbereiche der drei Feldtypen sind hinreichend gut getrennt, so daß eine Überlappung (bei variabler Verstimmung durch unterschiedliche Realteile der DK der Proben) vermieden wird. Bei einer typischen Ausführung ergeben sich z. B. folgende Betriebsresonanzfrequenzen bei eingeschobenem leeren Probenbehälter 5:

Beim $TE_{101}$-Feldtyp $f_0 = 1{,}93$ GHz,
beim $TE_{102}$-Feldtyp $f_0 = 2{,}51$ GHz und
beim $TE_{103}$-Feldtyp $f_0 = 2{,}98$ GHz.

3

Bei gefülltem Probenbehälter ergibt sich eine zusätzliche Frequenzverschiebung um maximal 200 MHz nach tieferen Werten.

Die Ankopplung des Resonators erfolgt elektrisch über kleine Stabantennen 8 am Resonatorein- 2 und -ausgang 3. Wie oben beschrieben, kann die Güte des Resonators durch die Wahl des Ortes und der Länge der Stabantennen 8 beeinflußt werden. Ein wichtiger Gesichtspunkt ist dabei, daß die zu den einzelenen Feldtypen gehörenden Gütefaktoren so gewählt werden, daß einerseits die gewünschte Abstufung der Feuchtemeßbereiche und andererseits eine Unterdrückung unerwünschter Feldtypen erreicht wird. Praktisch geht man so vor, daß am Resonatorein- und -ausgang jeweils mehrere Stabantennen 8 parallel zum E-Vektor längs der Mittellinie angebracht sind, die an den Mikrowellenoszillator angeschlossen werden können. Bei Verwendung der beiden Feldtypen $TE_{101}$ und $TE_{102}$ wird man bestrebt sein, den Gütefaktor im Feldtyp $TE_{101}$ hinreichend hoch zu treiben, um eine hohe Meßempfindlichkeit zu erhalten (Messung im E-Feld-Maximum), um geringe Feuchtewerte messen zu können. Dies ist nur mit einer schwachen Ankopplung möglich. Eine schwache Ankopplung erreicht man durch eine relativ kurze Antennenlänge S, d. h. $0 \leq S \leq \lambda/4$. Die Positionierung der Stabantennen 8 ergibt sich aus der korrelierenden Forderung einer niedrigen Meßempfindlichkeit (kleine Güte) beim $TE_{102}$-Feldtyp und damit einer Lokalisierung im E-Maximum des $TE_{102}$-Feldtyps unter Berücksichtigung einer geringen Feldverzerrung durch die eingegebene Probe. Der $TE_{103}$-Feldtyp ist bei elektrischer Ein- und Auskopplung zur Erzielung einer noch höheren Meßempfindlichkeit als bei Verwendung des $TE_{101}$-Feldtyps geeignet. In diesem Falle ist die Antennenposition A″ an Stelle A′ zu verwenden, wobei A″ dem E-Feld-Maximum des $TE_{103}$-Feldtyps entspricht (siehe Fig. 3). Hierdurch wird eine Doppeldeutigkeit der Anzeige vermieden. Bei Beschickung des Resonators 1 mit dem leeren Probenbehälter ergeben sich so z. B. für die einzelnen Feldtypen folgende Gütefaktoren:

$TE_{101}$ Q = 690, Ankopplung bei A′, A′, S = 10 mm
$TE_{102}$ Q = 285, Ankopplung bei A′, A′, S = 10 mm
$TE_{103}$ Q = 1355, Ankopplung bei A′, A′, S = 10 mm.

Unter diesen Bedingungen kann bei Verwendung des $TE_{101}$-Feldtyps ein Meßbereich von etwa 0,5 — 10 Gew.-% und mit dem $TE_{102}$-Feldtyp ein Meßbereich von 10 bis fast 100% Wassergehalt realisiert werden.

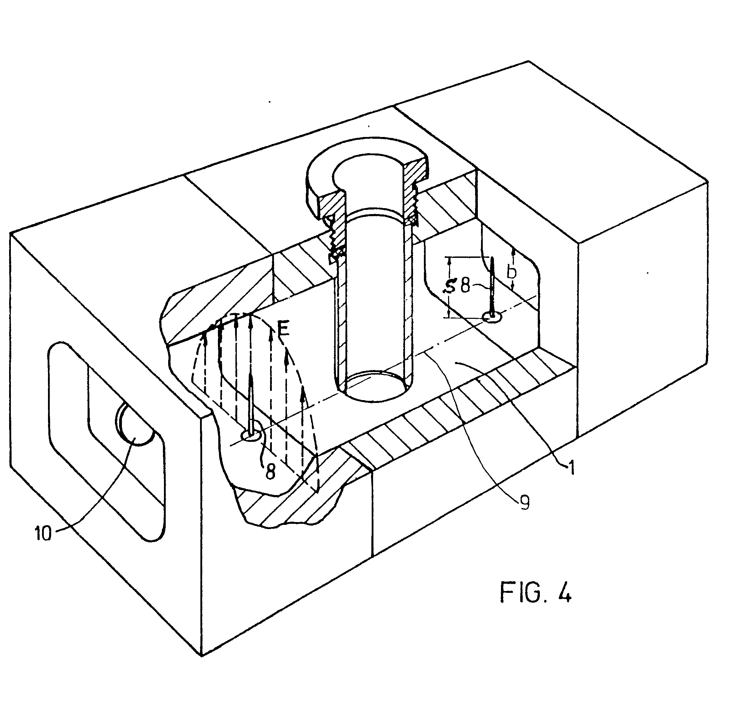

An Stelle einer elektrischen Ein- und Auskopplung der Mikrowellenenergie mit Hilfe von Stabantennen kann man auch eine rein magnetische Ankopplung mit Irisblenden 10 vorsehen (siehe Fig. 4; die Stabantennen 8 sind bei dieser Ausführungsform ebenfalls eingezeichnet). Der Gütefaktor wird in diesem Falle durch passende Wahl des Durchmessers und der Tiefe der Irisbohrung festgelegt. Die magnetische Ankopplung bietet eine bessere Unterdrückung störender Feldtypen in höheren Frequenzbereichen und ermöglicht deshalb auch die Verwendung höherer Feldtypen bis etwa $TE_{105}$. Außerdem kann eine bessere Abstufung der Feuchtemeßbereiche erreicht werden. So kann die Ankopplung des $TE_{101}$-Feldtyps dadurch erheblich verringert werden, daß bei Verwendung von Coax-Rohrleiterübergängen (Adaptern) die untere Grenzfrequenz des Adapters in den Bereich der $TE_{101}$-Resonanz angehoben wird, so daß sich für den $TE_{101}$-Feldtyp eine sehr schwache Kopplung, für den $TE_{102}$ und höhere Feldtypen jedoch eine starke Kopplung ergibt, die mit der Frequenz zunimmt.

Die Reihenfolge der Feldtypen nach fallender Feuchte-Meßempfindlichkeit geordnet, lautet dann z. B. $TE_{101}$, $TE_{103}$, $TE_{105}$, $TE_{104}$, $TE_{102}$.

Die Probe befindet sich bei Anregung einer ungeraden Anzahl von Halbwellen im E-Feld-Maximum. Wird die Probe jedoch im Maximum des H-Feldes angeordnet, so kann bei geeigneter Dimensionierung des Probenbehälters 5 eine inhomogene Teilwelle im Probenvolumen angeregt werden. So kann z. B. durch magnetische Ankopplung aus dem im Rechteck-Resonator herrschenden $TE_{102}$-Feldtyp im zylindrischen Probenvolumen (Probe in der Resonator-Mitte, Zylinderachse parallel zum E-Feld des $TE_{102}$-Feldtyps) die $TM_{010}$-Welle bei $D = 0,766 \lambda/\sqrt{\epsilon'}$ oder bei $D = 0,586 \lambda/\sqrt{\epsilon'}$, die $TE_{11}$-Welle angeregt werden. Dabei bedeuten D = Durchmesser des Probenvolumens, $\epsilon'$ der Realteil der Dielektrizitätskonstanten und $\lambda$ die Vakuumwellenlänge. Parasitäre Resonanzen im Probenvolumen sind normalerweise unerwünscht, da sie den monotonen Verlauf der Eichkurve stören können. Sie führen dazu, daß bei bestimmten Wassergehalten, die einen zur Resonanz erforderlichen $\epsilon'$-Wert liefern, abnormal hohe Absorptionen auftreten. Diese Anhebung der Absorption kann man aber nutzbar machen, um die Eichkurve am oberen Ende des Feuchtemeßbereichs, d. h. bei sehr hohen Wassergehalten, zu linearisieren. Auf diese Weise wird auch in diesem Bereich eine hohe Meßempfindlichkeit erzielt.

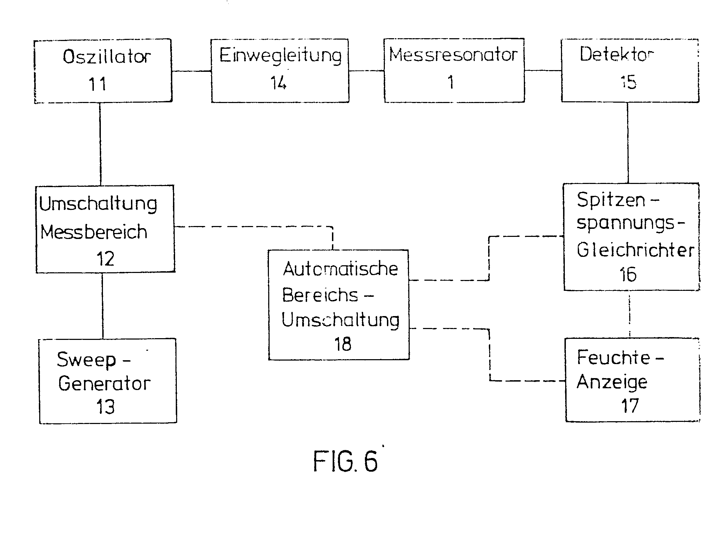

Fig. 6 zeigt den Verlauf der Eichkurve, der sich ergibt, wenn ohne und mit Anregung einer inhomogenen Teilwelle im Probenvolumen gearbeitet wird. Die Kurve I wurde für den $TE_{101}$-Feldtyp ohne Anregung einer inhomogenen Teilwelle gemessen, während sich die Eichkurve II mit dem $TE_{102}$-Feldtyp und bei Anregung einer inhomogenen Teilwelle im Probenvolumen ergab. Man erkennt, daß bei hohem Wassergehalt der Probe durch die Anregung einer inhomogenen Teilwelle die Meßgenauigkeit im oberen Teil des Meßbereiches gegenüber I wesentlich erhöht wird. Die Kurve I verläuft in diesem Teil sehr flach.

Praktisch wird die Eichkurve II dadurch realisiert, daß der Durchmesser D des Probenbehälters 5

**0 011 185**

entsprechend den oben genannten kritischen Bedingungen dimensioniert wird. Diese Bedingungen gelten natürlich nur für die hohen Wassergehalte am oberen Meßbereichsende.

Die komplette Mikrowellenmeßanordnung wird anhand des Blockschemas, Fig. 6, erläutert. Der Mikrowellengenerator besteht aus einem Transistor-Oszillator 11, der mit Hilfe eines Varactors abstimmbar ist. Durch den Meßbereichsschalter 12 wird die Grundspannung vorgewählt und dadurch der Oszillator 11 auf die Mittenfrequenz der jeweiligen Eigenresonanz, z. B. 1,9, 2,5 oder 3 GHz abgestimmt. Bei höheren Frequenzen wird zweckmäßig ein sogenannter Gunn-Oszillator verwendet, der z. B. mittels einer Kapazitätsdiode (Varactor) über ein Oktavband durchgestimmt werden kann. Der Grundspannung wird eine sägezahnförmige Sweepspannung aus dem Sweep-Generator mit einer geringeren Amplitude überlagert. Dadurch wird die Oszillator-Frequenz periodisch mit einem Hub von z. B. 200 MHz frequenzmoduliert, so daß die vollständige Resonanzkurve der betreffenden Eigenresonanz, z. B. $TE_{101}$ oder $TE_{102}$ oder $TE_{103}$ usw. bei Beschickung des Resonators 1 mit dem leeren und gefüllten Probenbehälter 5 jeweils überstrichen wird. Zwischen Resonator 1 und Oszillator 11 ist zur Vermeidung einer Rückwirkung der reaktiven Last auf den Oszillator 11 eine Einwegleitung 14 geschaltet. Am Ausgang des Resonators 1 ist der Mikrowellendetektor 15 angeschaltet, der nach der Gleichrichtung des Mikrowellensignals die Resonanzkurve des Meßresonators 1 liefert. Die Einwegleitung 14 und der Detektor 15 können wahlweise an die im Resonator vorgesehenen Stabantennen 8 bzw. Irisblenden 10 angeschlossen werden.

Der Spitzenspannungswert am Mikrowellendetektor 15 wird in einem nachgeschalteten Spitzenspannungsgleichrichter 16 ermittelt. Die Größe des Spitzenspannungswertes stellt eine monotone Funktion des Feuchtgehaltes der Probe dar und wird in Form des sogenannten Feuchtewertes digital oder analog durch die Anzeige 17 dargestellt. Anhand einer Eichkurve kann der Feuchtewert in Gew.-% Feuchte umgerechnet werden.

Bei einer modifizierten Ausführung wird der Meßbereich nicht von Hand, sondern automatisch und periodisch umgeschaltet. Das Meßsignal wird bei dieser Ausführung elektronisch verschiedenen Meßkanälen zugeordnet, die den einzelnen Feuchtemeßbereichen entsprechen. Auf diese Weise wird von dem Gerät automatisch der Meßkanal mit dem entsprechenden Feuchtemeßbereich ausgewählt, in dem der Meßwert jeweils liegt. Das Gerät braucht also nicht von Hand auf den richtigen Meßbereich eingestellt zu werden.

**Patentansprüche**

1. Vorrichtung zur Messung des Wassergehaltes von elektrisch nicht leitenden isotropen Materialien, insbesondere von Pulvern, Granulaten, Pasten, Flüssigkeiten, bestehend aus einem frequenzmodulierten Mikrowellenoszillator, der in einer Transmissionsanordnung einen Resonator speist, welcher in seiner Mitte mit einer Probe des zu untersuchenden Materials beschickbar ist, und einer Detektorschaltung zur Messung der Spitzenamplitude des Transmissionssignales, bei der die Änderung des Transmissionssignales der Gütefaktoränderung des Resonators durch die eingebrachte Probe entspricht, dadurch gekennzeichnet, daß die Mittenfrequenz des Mikrowellenoszillators (11) über mehrere Stufen umschaltbar ist und entsprechend den Mittenfrequenzen derart unterschiedliche Feldtypen im Resonator (1) angeregt werden, daß sich die Probe ohne ihre Lage im Resonator (1) zu verändern, zur Messung hoher Wassergehalte in einem Knotenbereich des elektrischen Meßfeldes und zur Messung geringer Wassergehalte in einem Maximum des elektrischen Meßfeldes befindet.

2. Vorrichtung nach Anspruch 1, dadurch gekennzeichnet, daß die Resonatorgüte durch Umschaltung der Mikrowellenenergie auf geometrisch unterschiedliche Koppelglieder (8, 10) am Resonatoreingang (2) und Resonatorausgang (3) einstellbar ist.

3. Vorrichtung nach Anspruch 1 bis 2, dadurch gekennzeichnet, daß der Frequenzhub des Mikrowellenoszillators (11) derart eingestellt ist, daß die vollständige Resonanzkurve des mit dem leeren und dem gefüllten Probenbehälter (5) beschickten Resonators (1) vollständig überstrichen wird und die Mittenfrequenzen des Mikrowellenoszillators (11) so gewählt sind, daß eine Überlappung der Frequenzbereiche der einzelnen Feldtypen, die sich bei Beschickung mit dem leeren und dem gefüllten Probenbehälter (5) ergeben, vermieden wird.

4. Vorrichtung nach Anspruch 1 bis 3, dadurch gekennzeichnet, daß die Umschaltfrequenzen des Mikrowellenoszillators (11) zwischen 0,5 und 18 GHz liegen, der Frequenzhub zwischen 10 und 1000 MHz und die Modulationsfrequenz zwischen 1 Hz und 100 kHz gewählt ist und der Resonator (1) ein Rechteck-Hohlraumresonator ist, der sowohl im $TE_{101}$ als auch im $TE_{102}$-Feldtyp oder im $TE_{102}$ und im $TE_{103}$ oder im $TE_{101}$, $TE_{102}$ und $TE_{103}$ oder in beliebigen Kombinationen bis zum $TE_{105}$-Feldtyp angeregt werden kann.

5. Vorrichtung nach Anspruch 2, dadurch gekennzeichnet, daß zur Ein- und Auskopplung der Mikrowellenenergie in den Resonator (1) parallel zum E-Vektor orientierte Stabantennen (8) vorgesehen sind, deren Länge (S) zwischen 0 und $\lambda/4$ gewählt ist, wobei $\lambda$ die Wellenlänge der kürzesten Betriebswellenlänge darstellt.

6. Vorrichtung nach Anspruch 5, dadurch gekennzeichnet, daß die Stabantennen (8) längs der

5

Mittellinie der Breitseite des Rechteckresonators (1) symmetrisch zur Resonatormitte zwischen dem Resonatorende und dem äußeren E-Feld-Maximum des höchsten verwendeten Feldtyps angeordnet sind.

7. Vorrichtung nach Anspruch 1 bis 4, dadurch gekennzeichnet, daß zur Ein- und Auskopplung der Mikrowellenenergie in den Resonator (1) in der Mitte beider Endquerschnitte gleichartige Irisblenden (10) angebracht sind.

8. Vorrichtung nach Anspruch 7, dadurch gekennzeichnet, daß zur Ankopplung der koaxial zugeführten Mikrowellenenergie Coax-Rohrleiterübergänge vorgesehen sind, deren langwellige Grenzfrequenz so hoch gewählt ist, daß der Kopplungsrad von der tiefsten eingestellten Frequenz (Feldtyp $TE_{101}$) zu höheren Frequenzen hin zunimmt und dementsprechend eine Abstufung der Gütefaktoren

$$Q_{TE_{101}} > Q_{TE_{103}} > Q_{TE_{102}}$$

des mit dem leeren Probenbehälter (5) beschickten Resonators (1) erzielt wird.

9. Vorrichtung nach Anspruch 1 bis 8, dadurch gekennzeichnet, daß der Resonator (1) einen Durchbruch (4) enthält, der zur Aufnahme und Führung des Probenbehälters (5) parallel zum E-Vektor des $TE_{10}$-Feldtyps dient.

10. Vorrichtung nach Anspruch 1 bis 9, dadurch gekennzeichnet, daß der Probenbehälter (5) aus einem Hohlzylinder (6) aus PTFE oder einem Material mit ähnlich niedrigen dielektrischen Verlusten und geringster Wasseraufnahmefähigkeit besteht, und der Durchmesser D des Probenraumes (7) kleiner als 20% der Rohrwellenlänge des höchstfrequenten Feldtyps und die Höhe (h) des zylindrischen Probenraumes (7) kleiner als 30% der Höhe (b) des Rechteckwellenleiters (Richtung des E-Vektors) gewählt ist.

## Claims

1. An apparatus for measuring the water content of electrically non-conductive isotropic materials, in particular of powders, granulates, pastes, liquids, comprising a frequency-modulated microwave oscillator which supplies a resonator in an transmission arrangement, which resonator is able to be loaded in its centre with a sample of the material to be examined, and a detector circuit for measuring the peak amplitude of the transmisssion signal, in which the change of the transmission signal corresponds to the change in the quality factor of the resonator caused by the sample introduced, characterised in that the mean frequency of the microwave oscillator (11) can be switched over in several steps and according to the mean frequencies different field modes are excited in the resonator (1) so that the sample is located, without changing its position in the resonator (1), in a mode region of the electrical measuring field for measuring high water content and in a maximum of the electrical measuring field for measuring low water contents.

2. An apparatus according to claim 1, characterised in that the resonator quality factor can be adjusted by switching the microwave energy to geometrically different coupling members (8, 9) at the resonator input (2) and resonator output (3).

3. An apparatus according to claims 1 to 2, caracterised in that the frequency stroke of the microwave oscillator (11) is adjusted in such a way that the complete resonance curve of the resonator (1) loaded with an empty and a filled sample container (5) is exceeded completely and the mean frequencies of the microwave oscillator (11) are selected in such a way that the frequency ranges of the individual field modes which are produced during loding with the empty and the filled sample container (5) are prevented from over-lapping.

4. An apparatus according to claims 1 to 3, characterised in that the switching frequencies of the microwave oscillator (11) are between 0.5 and 18 GHz, the frequency stroke is selected between 10 and 1000 MHz and the modulation frequency between 1 Hz and 100 kHz and the resonator (1) is a rectangular cavity resonator which can be excited both in the $TE_{101}$ and in the $TE_{102}$ field mode or in the $TE_{102}$ and in the $TE_{103}$ field mode or in the $TE_{101}$, $TE_{102}$ and $TE_{103}$ or in any combination up to the $TE_{105}$ field mode.

5. An apparatus according to claim 2, characterised in that rod aerials (8) orientated parallel to the E vector are provided for coupling into and coupling out of the resonator (1) the microwave energy, the length (s) of these aerials being selected from between 0 and $\lambda/4$, $\lambda$ representing the wavelength of the shortest operating wavelength.

6. An apparatus according to claim 5, characterised in that the rod aerials (8) are arranged along the central line of the breadth of the rectangular resonator (1) symmetrically with respect to the centre of the resonator between the end of the resonator and the outer E-field maximum of the highest field mode used.

7. An apparatus according to claims 1 to 4, characterised in that similar iris couplers (10) are arranged in the centre of both end cross-sections in order to couple into and couple out of the resonator (1) the microwave energy.

6

8. An apparatus according to claim 7, characterised in that coaxial-turbular conductor adapters are provided for coupling the coaxially supplied microwave energy, the long-wave critical frequency of these adapters being selected sufficiently high for the degree of coupling to in crease from the lowest frequency adjusted ($TE_{101}$ field mode) to the higher frequencies and consequently to obtain gradation of the quality factors

$$Q_{TE101} > Q_{TE103} > Q_{TE102}$$

of the resonator (1) loaded with the empty sample container (5).

9. An apparatus according to claims 1 to 8, characterised in that the resonator (1) has an opening (4) which serves to take up and guide the sample container (5) parallel to the E-vector of the $TE_{10}$ field mode.

10. An apparatus according to claims 1 to 9, characterised in that the sample container (5) comprise a hollow cylinder (6) made of PTFE or a material having similarly low dielectric losses and a minimum of water absorbency, and the diamenter D of the sample chamber (7) is smaller than 20% of the pipe wavelength of the highest frequency field mode and the height (h) of the cylindrical sample chamber (7) is smaller than 30% of the height (b) of the rectangular wave guide (direction of the E-vector).

## Revendications

1. Dispositif de mesure de la teneur en eau de substances isotropes non conductrices électriquement, notamment des poudres, granulats, pâtes, liquides, comprenant un oscillateur à micro-ondes à modulation de fréquence qui, dans un montage de transmission, alimente un résonateur susceptible de recevoir dans sa partie centrale un échantillon du matériau à analyser, et un détecteur pour mesurer l'amplitude de crête du signal de transmission pour laquelle la variation du signal de transmission correspond à la variation de surtension du résonateur due à l'échantillon introduit, caractérisé en ce que la fréquence moyenne de l'oscillateur à micro-ondes (11) est commutable par l'intermédiaire de plusieurs étages et que différents modes sont exités dans le résonateur (1) en fonction des fréquences moyennes de telle sorte que, sans modifier sa position dans le résonateur (1), l'échantillon se trouve dans une zone nodale du champ électrique de mesure pour mesurer de fortes teneurs en eau et dans un maximum du champ électrique de mesure pour mesurer de faibles teneurs en eau.

2. Dispositif selon la revendication 1, caractérisé en ce que la qualité du résonateur est réglable par commutation de l'énergie des micro-ondes sur des éléments de couplage géométriquement différents (8, 10) à l'entrée (2) et à la sortie (3) du résonateur.

3. Dispositif selon les revendications 1 à 2, caractérisé en ce que l'amplitude de fréquence de l'oscillateur à micro-ondes (11) est réglée de manière que la courbe entière de résonance du résonateur (1) contenant le récipient à échantillon (5) vide et rempli soit entièrement balayée et que les fréquences moyennes de l'oscillateur à micro-ondes (11) sont choisies de manière à éviter un chevauchement des zones de fréquence des différents modes qui résultent de l'introduction du récipient à échantillon (5) vide et rempli.

4. Dispositif selon les revendications 1 à 3, caractérisé en ce que les fréquences de commutation de l'oscillateur à micro-ondes (11) se situent entre 0,5 et 18 GHz, l'amplitude de fréquence est choisie entre 10 et 1000 MHz et la fréquence de modulation entre 1 Hz et 100 kHz, et le résonateur (1) est un résonateur creux à ondes rectangulaires pouvant être excité tant dans le mode $TE_{101}$ que $TE_{102}$ ou dans le $TE_{102}$ et dans le $TE_{103}$ ou dans le $TE_{101}$, $TE_{102}$ et $TE_{103}$ ou dans n'importe quelle combinaison jusqu'à $TE_{105}$.

5. Dispositif selon la revendication 2, caractérisé en ce que pour coupler er découpler l'énergie des micro-ondes, le résonateur (1) comporte des antennes-tiges (8) oreintées parallèlement au vecteur E, dont la longueur (S) est choisie entre 0 et $\lambda/4$, $\lambda$ étant la longueur d'onde de la longueur d'onde de fonctionnement la plus courte.

6. Dispositif selon la revendication 5, caractérisé en ce que les antennes-tiges (8) sont disposées le long de l'axe médian du côté large du résonateur rectangulaire (1), symétriquement par rapport au centre du résonateur entre l'extrémité du résonateur et le champ électrique extérieur maximum du mode le plus élevé utilisé.

7. Dispositif selon les revendications 1 à 4, caractérisé en ce que des diaphragmes à iris (10) identiques sont introduits dans le résonateur (1) au centre des deux sections d'extrémité pour coupler et découpler l'énergie des micro-ondes.

8. Dispositif selon la revendication 7, caractérisé en ce que, pour coupler l'alimentation coaxiale de l'énergie des micro-ondes, on a prévu des jonctions tubulaires coaxiales dont la fréquence de seuil d'ondes longues est si élevée que le degré de couplage croît de la plus basse fréquence (mode $TE_{101}$) vers des fréquences élevées et qu'en conséquence, il en résulte un échelonnement des facteurs de

surtension

$$Q_{TE_{101}} > Q_{TE_{103}} > Q_{TE_{102}}$$

du résonateur (1) contenant le récipient à échantillon vide (5).

9. Dispositif selon les revendications 1 à 8, caractérisé en ce que le résonateur (1) présente un passage (4) destiné à recevoir et à guider le récipient à échantillon (5) parallèlement au vecteur E du mode $TE_{10}$.

10. Dispositif selon les revendications 1 à 9, caractérisé en ce que le récipient à échantillon (5) est un cylindre creux (6) en PTFE ou un matériau à aussi faibles pertes diélectriques et à très faible pouvoir d'absorption de l'eau, et le diamètre D de l'enceinte (7) est choisi de 20% inférieur à la longueur d'onde du tube du mode de la plus haute fréquence et la hauteur (h) de l'enceinte cyclindrique (7) est choisie de 30% inférieure à la hauteur (b) du guide d'ondes rectangulaires (dans le sens du vecteur E).

FIG. 1

FIG. 2

6      5

7

h

D

FIG. 3

E

TE 101

TE 102

TE 103

0      A″  A′      l/2      A′  A″      l

FIG. 4

13

FIG. 5

| Oszillator 11 | Einwegleitung 14 | Messresonator 1 | Detektor 15 |

| Umschaltung Messbereich 12 | Automatische Bereichs-Umschaltung 18 | Spitzen-spannungs-Gleichrichter 16 |

| Sweep-Generator 13 | | Feuchte-Anzeige 17 |

FIG. 6

17